# EUROPEAN PATENT SPECIFICATION

(11) **EP 3 311 942 B1**
(45) Date of publication and mention of the grant of the patent: **13.03.2019**
(21) Application number: 17197810.9
(22) Date of filing: 23.10.2017
(51) Int. Cl.: B23B 29/04, B23B 31/00, B23B 29/06, B23B 31/103

(54) **DEVICE AND SYSTEM FOR SUPPORTING MICRO-TOOLS**
VORRICHTUNG UND ANORDNUNG ZUM STÜTZEN VON MIKROWERKZEUGEN
DISPOSITIF ET SYSTEME DE SUPPORT DE MICRO-OUTILS

(30) Priority: 24.10.2016 IT 201600107052
(43) Date of publication of application: 25.04.2018
(73) Proprietor: Pellini, Christian, 6825 Capolago TI (CH); De Gennaro, Christophe, 6932 Breganzona TI (CH)
(72) Inventor: Pellini, Christian, 6825 Capolago TI (CH); De Gennaro, Christophe, 6932 Breganzona TI (CH)
(74) Representative: De Gaspari, Andrea

(56) References cited:
- EP-A1- 2 821 168
- DE-A1- 19 831 743
- DE-A1-102004 053 511
- FR-A- 1 497 546
- US-A- 3 557 419
- US-A- 4 930 947
- US-A1- 2011 064 529

## Description

### Background of the invention

The present invention generally finds application in the field of machine tool equipment and relates to a device for supporting micro-tools according to the preamble of claim 1.

The invention further relates to a system for supporting micro-tools that comprises the above device.

### Description of Prior Art

In machine tools operating by chip removal, particular support devices are used for supporting a tool designed to perform a given machining operation on a metal workpiece.

These supports are commonly known as tool supports and have an elongate body that is adapted to be secured to a stationary or moving turret of the machine tool and have a housing for receiving a tool.

The tool has a cutting portion, for cutting or removing material from the metal workpiece and a generally cylindrical shaft that is designed to be received in the housing formed on the support.

The support is designed with such a shape and size as to minimize the oscillations and vibrations created in the tools while the metal workpiece is being processed.

The support also ensures relatively accurate positioning of the tool relative to a fixed reference position, whereby the same machining operations may be repeated on the same metal workpiece or on different workpieces with high accuracy.

Machine tools that perform high-precision mechanical machining, like those employed, for instance, in micromechanics and watchmaking, require a support that can ensure a highly accurate and time-consistent positioning of the tool.

Namely, the machining performed with these machine tools have tolerances in the order of micrometers (10⁻⁶m), which may be only obtained if accurate and time-consistent positioning of the tool is ensured.

In particular, this degree of precision must be maintained even during tool change, and to minimize (or entirely eliminate) the next step offset compensation stet that these machines are perform before use of the new tool.

For this purpose, micro-tool supports have been designed that can secure the tool in a fixed and as much as possible time-invariant position.

WO2015/000985 discloses a system for supporting micro-tools comprising a cylindrical body with a hole for receiving a cutting tool. The latter has a front cutting portion and a rear cylindrical portion with a tapered end face which is adapted to interact with a horizontal bolt inserted in the body and extending through the hole.
In correspondence with the intermediate portion of the tool was formed an inclined surface designed to come into contact with the tapered inner surface of a clamping sleeve designed to be tightened on the cylindrical toolholder. The tool may be allowed to be clamped both axially and radially by tightening the nut to cause the conical surfaces of the tool to abut the respective surfaces of the bolt and the nut.

DE19831743 discloses a machining assembly for machine tools having a cylindrical body with a central hole for receiving a cutting tool.
Once again, a bolt is provided that can be transversely fitted on the body and is designed to abut the inclined rear face of the tool. A circular seat is formed on the outer surface of the tool, for receiving a locking ring which is designed to be retained by a threaded nut that can be screwed onto the tool body. Here, the tool is axially locked by contact between the locking ring and the flange, whereas it is axially locked by contact of the inclined rear face wit the bolt.

EP0973625 discloses a toolholding assembly having a cylindrical body with a hole for receiving a corresponding tool with a semicircular undercut. A transverse hole is formed on the body for receiving an eccentric bolt which is adapted to selectively interact with the semicircular surface of the undercut formed on the tool to lock it and eliminate radial clearances. The tool also has a rear portion of smaller diameter which is joined to the front portion through an annular edge that is designed to abut a small transverse bolt inserted in the body.

US4930947 discloses a toolholding device having all the technical features introduced in the preamble of claim 1.

While these arrangements are widely used in the field of high-precision machine tools, they still suffer from a few important drawbacks.

First, the precision of these supports is not constant over time but considerably decreases during use.

During tool change, the inner surface of the hole of the support and the outer surface of the tool rub against each other.

The tool positioning means is able to move in appropriate seats and the end edge of the tool is designed to contact the transverse wall of the hole and the outer surface of a cylindrical abutment pin. This configuration increases the wear of the pats with time and, as a result, reduces the tool holding accuracy.

Furthermore, a small clearance is provided between the hole and the tool whereby the tool-locking position during replacement becomes inaccurate and hardly repeatable.

Also, the parts of the support that are adapted to selectively lock the tool against the tool holder cannot lock the tool in a reference position and their end surfaces exert a predetermined, non negligible pressure on the outer surface of the tool.

Such rubbing and pressure cause wear in the hole or the end surfaces of the parts when the latter are made of a metal whose hardness index is lower than that of the tool.

A further drawback of these arrangements is that they have a highly complex construction with a large number of parts.

As a result, the above discussed tool-holding systems are very expensive and require non-negligible assembly times.

Also, in these tool-holding systems, the cutting part of the tool is not easily cooled with a liquid refrigerant, as a through hole must be formed on the cylindrical body of the tool for the liquid to reach the front portion thereof.

Furthermore, in the above discussed too-holding systems, the position of the tool may vary due to the presence of impurities in the housing hole. These impurities are within the cooling liquid and settle in the hole when a machining operation is being carried out.

Another important drawback of these arrangements is that of the tool may be slightly rotated about its axis as it is being locked to the support, which introduces some uncertainty in the positioning of the cutting edge relative to a horizontal plane.

### Summary of the invention

The present invention is aimed at solving the above described technical problems by providing a device for supporting micro-tools that is able to place the tool in a predetermined position with high accuracy.

A further object of the present invention is to provide a device for supporting micro-tools that can set a highly accurate and repeatable position of the tool.

A further object of the present invention is to provide a device for supporting micro-tools that is highly durable and allows such accuracy to be maintained substantially constant with time.

A further object of the present invention is to provide a device for supporting micro-tools that can lock the tool in a position that is repeatable with time.

Another object of the present invention is to provide a device for supporting micro-tools whose tool-locking position is not affected by the presence of any impurities deposited by the cooling liquid in the housing.

Yet another object of the present invention is to provide a device for supporting micro-tools that can be easily manufactured by relatively simple mechanical machining.

A further object of the present invention is to provide a device for supporting micro-tools that has a relatively low cost.

Another important object of the present invention is to provide a device for supporting micro-tools that can ensure very simple cooling of the cutting portion with a cooling liquid without requiring any particular invasive machining on the tool.

These objects are fulfilled by a device for supporting micro-tools as defined in claim 1, which comprises an elongate body with a housing hole for receiving the rear portion of the tool and constraint means associated with the elongate body and adapted to interact with the outer surface of the rear portion to define a reference position for the edge of the cutting end of the tool.

The constraint means comprise at least one passage which intersects said housing hole and is substantially parallel thereto, and at least one pin which is designed to be inserted into said passage and whose peripheral surface is adapted to selectively interact with the outer surface of the rear portion of the tool to define at least one substantially continuous contact area therewith, which extends along the direction of extension of said pin. Each pin is coupled to a respective passage by interference fit and is locked in a substantially transverse direction to define a substantially constant and fixed position of said contact area relative to the center of the housing hole.

Further objects, as better described hereinafter, are fulfilled by a device for supporting micro-tools of the invention as defined in the accompanying claims 2 to 14.

A system for supporting micro--tools is also provided, of the type as claimed in claim 15.

This device for supporting micro--tools, and the support system associated therewith, have the advantage of dramatically reducing the wear created by the tool on the parts of the support, whereby the position of the tool with respect to the support even after a long period of use is maintained substantially unchanged.

By this arrangement, there will be no need for offset recalibration after each tool change, and the duration of the individual machining steps may be considerably reduced.

Furthermore, the parts designed to contact the tool may be made of sintered materials, such as hard metal or ceramic materials, whose hardness index is equal to or higher than that of the material that has been used to make the tool.

This will both dramatically reduce wear between the parts, and limit the elastic deformations endured by the support, or its parts, as the tool is being locked, thereby providing benefits in terms of positioning accuracy and repeatability.

### Brief description of the drawings

The features and advantages of the present invention will be clearly understood from the following detailed description of a few preferred non-limiting configuration of a device and a system for supporting micro-tools, particularly referring to the following drawings:
- Figures 1A and 1B are lateral and sectional views of a cutting tool in two different configurations;
- Figures 2A and 2B are a perspective view and a lateral view respectively of a device for supporting micro-tools of the invention;
- Figures 3A to 3E are a front view, two perspective views and a broken-away lateral view respectively of a device of the invention in a first configuration;
- Figures 4A to 4C are a front view, a perspective view and a broken-away lateral view respectively of a device of the invention in a second configuration;
- Figures 5A to 5C are a front view, a perspective view and a broken-away lateral view respectively of a device of the invention in a third configuration;
- Figures 6A to 6C are a perspective view, a lateral view and a sectional view respectively of a first detail used in the first three configurations of the device;
- Figures 7A to 7C are two perspective views and a broken-away lateral view respectively of a device of the invention in a fourth configuration.

### Description of the preferred embodiment

The present invention relates to a device for supporting micro-tools. This device, hereinafter designated by numeral **1,** may be mainly used in machine tools for high-precision machining of metal workpieces.

Namely, the device **1** of the present invention will be particularly suitable for use in machine tools designed for watchmaking or micromechanics.

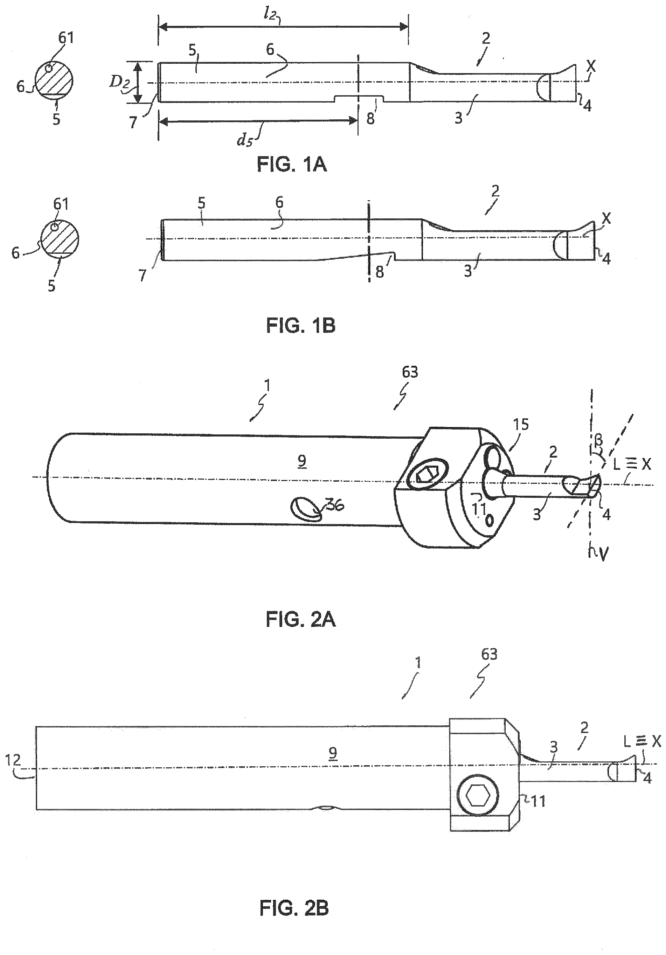

The present device **1** is configured to support tools **2** of the type as shown in **Figures 1A** and **1B** which comprise a generally cylindrical reduced-diameter front portion **3**having a cutting edge **4** at its end, designed for interaction with a metal workpiece for chip removal machining.

The tool **2,** also has an enlarged-diameter rear portion **5** which has a substantially cylindrical outer surface **6** and a flat end face **7.**

A flattened section **8** is formed on the rear portion **5** by grinding. This flattened section **8** may be substantially parallel to the axis of extension **X** of the tool 2, like in the tool of **Figure 1A****,** or inclined, like in the tool of **Figure 1B****.**

The device **1** comprises an elongate body **9** having a substantially cylindrical housing hole **10** for at least partially receiving the rear portion **5** of the tool **2.**

The diameter **D₁** of this housing hole **10** is greater than the diameter **D₂** of the rear portion **5** of the tool **2** for the latter to be fitted therein with a predetermined radial clearance.

Conveniently, the body **9** will be anchored to the turret of the machine tool via suitable locking systems, not shown.

Preferably, as best shown in the **Figures 2A, 2B****,** **3E** and **5C****,** the elongate body **9** may have a substantially cylindrical shape and may define a longitudinal axis L.

Here, the housing hole **10** will be longitudinal and may be formed at the center of the body **9.**

Also, the body **9** may have substantially flat and transversely-extending front face **11** and rear face **12,** and the housing hole **10** may extend through the body **9.**

Thus, the hole **10** will be delimited at its ends by a front opening **13** and a rear opening **14** located at the respective faces **11, 12** of the body **9.**

The device **1** also has constraint means **15** associated with the elongate body **9** and designed to interact with the outer surface **6** of the rear portion **5** of the tool **2.**

Namely, the constraint means **15** interact with of the tool **2** to place it in a predetermined reference position.

In a particularly advantageous aspect of the invention, the constraint means **15** comprise at least one passage **16** which intersects the housing hole **10** and is substantially parallel thereto, and a corresponding pin **17** that can be introduced into the passage **16** and has a peripheral surface **18** adapted to selectively interact with the outer surface **6** of the rear portion **5** of the tool **2** to create a substantially continuous contact area **19** therewith along the direction of extension of the pin **17.**

Conveniently, each pin **17** is coupled by interference fit to its respective passage and is locked in a substantially transverse direction.

While the pin **17** is able to longitudinally slide in its respective passage **16,** it is radially locked and its outer peripheral surface **18** has a substantially fixed transverse, or radial position.

Thus, the position of the contact area **19** created by the peripheral surface **18** of the pin **17** and the outer surface **6** of the tool **2** will also be substantially constant and fixed with respect to the center **C** of the housing hole **10.**

The possibility of transversely locking the pin **17** allows the tool **2** to be locked to the device **1** with greater accuracy and precision, as the lack of radial clearance between the pin **17** and its respective passage **16** minimizes the wear between the respective contacting surfaces **18, 21.**

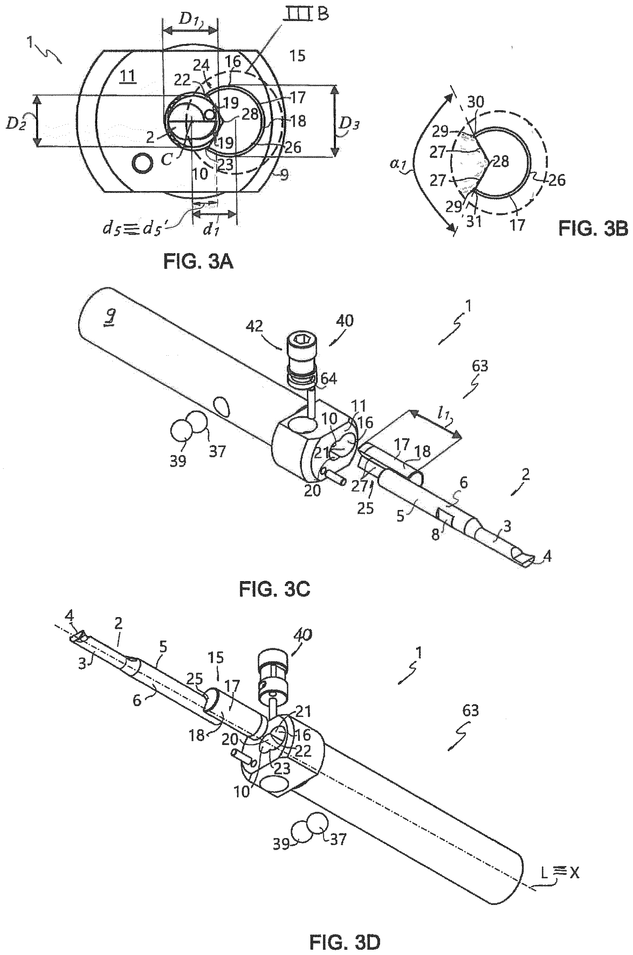

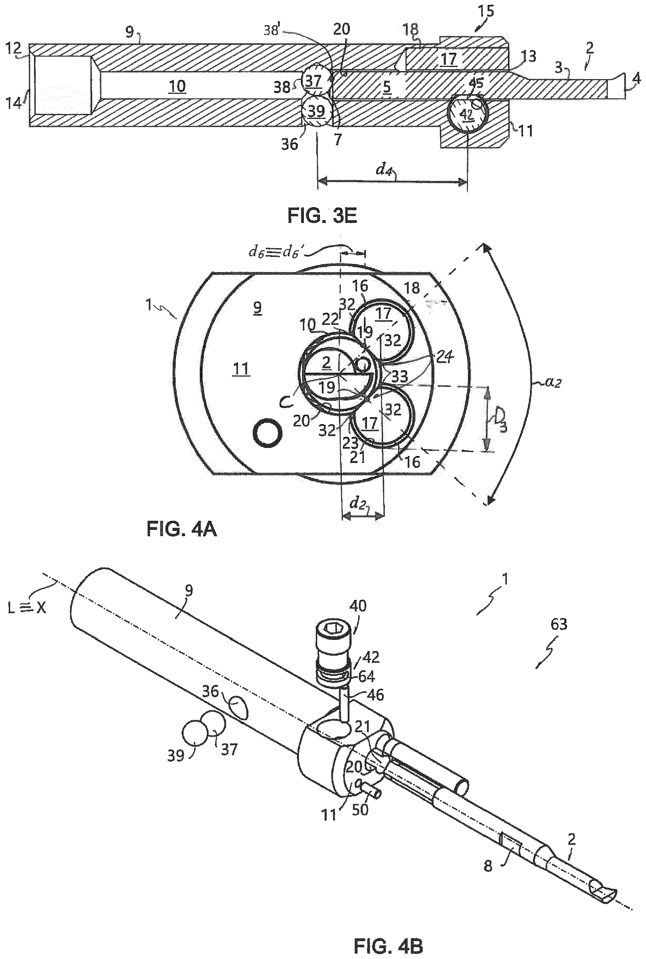

According to a first configuration of the invention, as shown in **Figures 3A - 3E****,** the constraint means **15** may comprise a blind longitudinal passage **16,** which is formed by drilling with a substantially cylindrical drill bit.

The diameter **D₃** of this passage **16,** as clearly shown in **Figure 3A** is greater than the diameter **D₁** of the housing hole **10** and can be conveniently spaced apart from its center **C** at a predetermined first distance **d₁** selected to promote the intersection between the two holes **10, 16.**

Thus, in the extension of the longitudinal passage **16,** the housing hole **10** has an open section as its inner surface **20** is substantially semicircular and is joined to the semicircular inner surface **21** of the passage **16** at two common longitudinal edges **22, 23** located at the intersection **24** of the two holes **10, 16.**

Conveniently, in this configuration the pin **17** has a substantially cylindrical shape and has a longitudinal substantially V-shaped notch **25,** as best shown in **Figures 3B** **- 3D.**

Such notch **25** may extend along the entire length **I**₁ of the pin **17** in a direction substantially parallel to its axis of extension, such that the peripheral surface **18** of the pin **17** will have a semicircular section **26** and two flat and longitudinal sections **27,** with mutually joined inner edges **28** and outer edges **29** connected to the corresponding ends **30, 31** of semicircular section **26.**

The two flat longitudinal sections **27** are inclined and converge toward the inner edge **28** and may be typically angularly spaced apart at an angle **α**₁ ranging from 90° to 140°, generally of about 120°.

The pin **17** will be adapted to fit into the blind passage **16** with the flat sections **27** facing the tool **2** at the region of intersection **24** of two holes **10, 16.**

Therefore, as the tool **2** is being locked, the outer surface **6** of the rear portion **5** will contact the peripheral surface **18** of the flat sections **27** and two continuous contact areas **19** will be consequently formed between these two surfaces in a substantially longitudinal direction.

The two contact areas **19** are angularly spaced apart at the same angle **α**₁ that separates the flat sections **27** and preferably longitudinally extend along the entire length **I**₁ of the pin **17**.

Furthermore, the two contact areas **19** have a substantially constant and fixed distance **d₅**, **d₅'** from the center **C** of the hole **10** respectively.

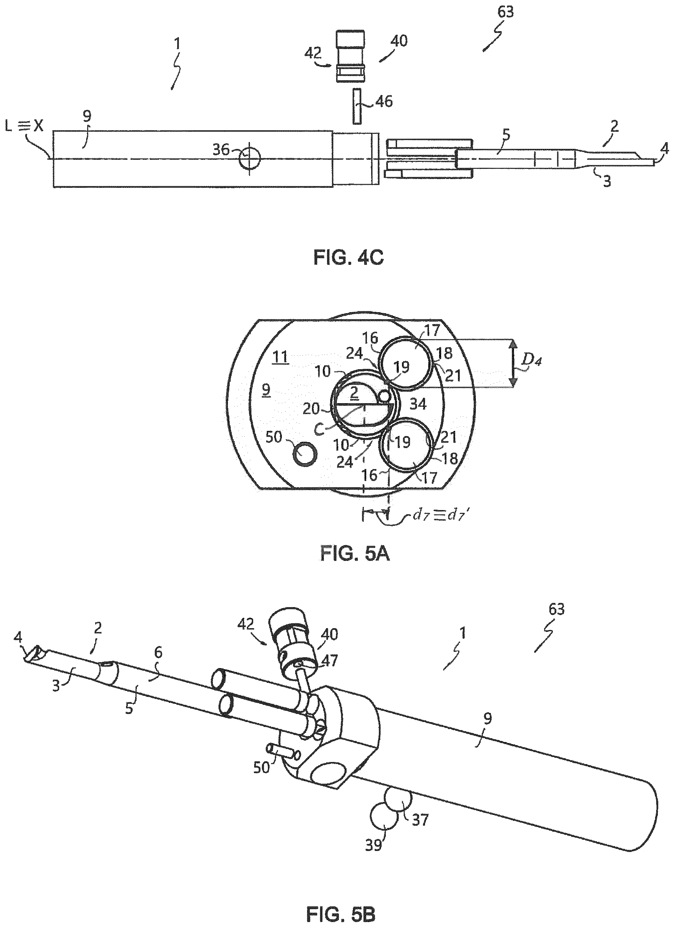

In an alternative configuration of the present invention, as shown in **Figures 4A** - **4C****,** the constraint means **15** comprise a pair of blind longitudinal passages **16** which are arranged on the periphery of the housing hole **10** and are spaced apart from its center **C** at a second predetermined distance **d₂**.

The passages **16** of the pair may be substantially parallel to the hole **10** and may be formed by drilling with a cylindrical drill bit. Furthermore, the second distance **d₂** will be chosen to allow the intersection of each passage **16** with the housing hole **10.**

Conveniently, the second distance **d₂** will vary according to the diameter **D₃** of the passages **16** which may be greater or smaller than or equal to the diameter **D₁** of the housing hole **10** for the tool **2.**

Once again, in the extension of the passages **16,** the housing hole **10** will have an open section and its inner surface **20** will have two semicircular sections each with longitudinal edges **22, 23; 32, 33** in common with those of the inner surface **21** of the passages **16.**

The two longitudinal passages **16** are in turn angularly spaced apart with a respective predetermined angular pitch **α₂** which is smaller than the straight angle (180°).

By way of example, in the configuration of the invention as shown in **Figures 4A** - **4C** the angular pitch **α₂** that separates the two longitudinal passages **16** is about 90°.

These passages **16** are adapted to accommodate a pair of substantially cylindrical pins **17** which have been subjected to flattening over their entire length **I₁.**

Furthermore, this flattened area extends in a direction substantially parallel to the axis of the pins.

Thus the peripheral surface **18** of these pins **17** has a semicircular section **26** that is joined to a corresponding flat section **27.**

The pin **17** will be adapted to fit into the blind passage **16** with the corresponding flat section **27** facing the tool **2,** such that the latter may be placed at the region of intersection **24** of two holes **10, 16.**

As the tool **2** is being locked, the outer surface **6** of the rear portion **5** will contact the peripheral surface **18** of the flat sections **27** and two longitudinally continuous contact areas **19** will be consequently formed between these two surfaces.

Once again the contact areas **19** between the outer surface **6** of the tool **2** and the peripheral surface **18** of the flat section **27** may extend along the entire length **I**₁ of the pin **17** and have a substantially fixed and constant distance **d₆, d₆'** from the center **C** of the hole **10.**

A further configuration of the device is also provided, which uses a different conformation of the constraint means **15,** as best shown in **Figures 5A - 5C****.**

Also in this configuration, as described for the device as shown in the Figures **4A** - **4C****,** the constraint means **15** comprise a pair of blind longitudinal passages **16** which intersect the housing hole **10.**

Nevertheless, here a pair of cylindrical pins **17** are provided which, upon insertion into the blind passages **16,** have a semicircular portion **34** of their peripheral surface **18** facing the tool **2** and situated level with the intersection region **24** of the two holes **10, 16.**

This semicircular portion **34** of the peripheral surface **18** of each pin **17** will be adapted to contact the outer surface **6** of the rear portion **5** of the tool **5** and, as a result, a corresponding contact area will be formed between these two surfaces, which will seamlessly extend in a substantially longitudinal direction.

In much the same manner as in the configurations as shown in **Figures 1A - 4C****,** once again the distance **d₇, d₇'** of the respective contact area **19** from the center **C** of the hole **10** is substantially constant and fixed.

Also, the cylindrical pin **17** may have a calibrated and constant diameter **D₄** all along its length **I**₁, and be able to create a longitudinally continuous contact area **19** with the outer surface **6** of the tool **2,** extending along the entire length **I**₁ of the pin **17.**

Alternatively, these pins **17** may have at least one end portion **35** of reduced diameter which is not designed to contact the tool **2.**

Therefore, in this case, the continuous contact area **19** formed between the outer surface **6** of the tool **2** and the peripheral surface **18** of the pin **17** will have a smaller longitudinal extent **I₃** than the length **I**₁ of the pin **17.**

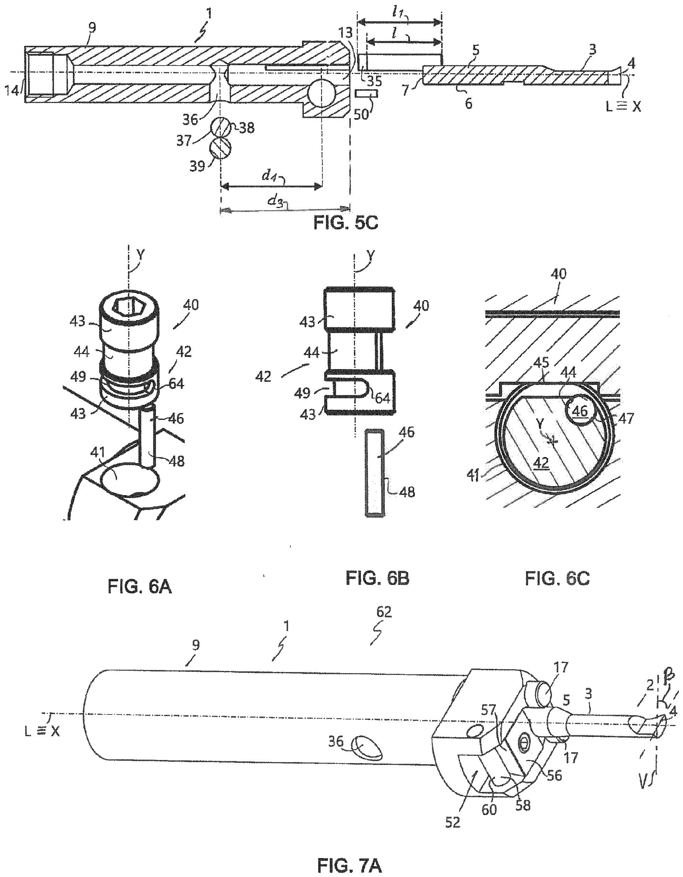

Conveniently, the constraint means **15** may comprise a transverse passage **36** communicating with the housing hole **10** and located at a predetermined distance **d₃** from the front face **11** of the body **9,** as best shown in **Figures 3D** **and** **5C****.**

Namely, this distance **d₃** will be generally equal to the length **I₂** of the rear portion **5** of the tool **2.**

The constraint means **15** may further comprise a metal ball **37** that is designed to be introduced into the transverse passage **36** with interference fit, and to partially block the housing hole **10.**

A cylindrical pin, not shown, may be also introduced into the transverse passage **36** instead of the ball **37.**

Nevertheless, with the use of a ball **37** a substantially point-like portion **38'** of its peripheral surface **38** may be found to be adapted to abut the rear end face **7** of the tool **2** such that a longitudinal reference position for the latter may be set.

The contact between the ball **37** and the face **7** will define a longitudinal reference position of the tool **2** and will accordingly also set a longitudinal reference position for its cutting edge **4** at its end .

A substantially point-like configuration of the contact area **38'** that is created between the ball **37** and the end face **7** of the tool **2** can minimize the friction that acts thereupon, as the tool **2** is introduced and locked to the support device **1.**

Such conformation of the constraint means **15,** which is adapted to define a longitudinal reference position by the use of a metal ball **37,** is used in all the configurations of the device **1** as shown in the **Figures 2A - 7C****.**

Furthermore, the constraint means **15** may comprise an additional ball **39,** which is introduced by interference fit in the transverse passage **36** with the purpose of entirely blocking the later and contacting the other metal ball 37 to retain it in the housing hole **10** and prevent it from coming out of it.

Advantageously, the pins **17** and the metal ball **37** as used in the constraint means **15** may be formed with a hard sintered metal and/or a ceramic material, having a hardness similar to or higher than the hardness of the tool **2.**

The provision of the pins **17** can provide contact areas that extend with the outer surface **6** of the tool **2,** whereby the latter may be retained in the reference position with high accuracy and repeatability, while complying with very small tolerances, of the order of a few micro-meters.

In addition, the use of hard materials for forming the constraint means can considerably reduce wear over time; this will afford a highly reliable and accurate micro-tool supporting device that will be able to considerably reduce the time employed by the machine tool to correct the offset after a tool change.

The device **1** will also comprise locking means **40** associated with the elongate body **9** and adapted to interact with the flattened section **8** formed on the rear portion **5** of the tool **2** to promote selective locking thereof in the reference position.

Namely, the locking means **40** are adapted to cause the cutting edge **4** of the tool **2** to be locked in a given reference position.

In the reference position the end cutting edge **4** has a given longitudinal position, which is obtained by abutment of the tool **2** with the ball **37.**

In the reference position, the tool **2** also has a given radial position in which the cutting edge **4,** or a portion thereof, is angularly inclined by a predetermined angle **β** relative to a particular reference axis, for instance a vertical axis **V.**

The locking means **40** can lock the cutting edge **4** of the tool **2** in the longitudinal and radial reference positions in a repeatable and constant manner.

The constraint means **15,** and particularly those for the pin **17,** can set a precise reference position for the tool **2.**

Furthermore, the locking means **40** cooperate with the constraint means **15** to releasably lock the tool **2** in the reference position.

In the configurations of the invention as shown in Figures **2A - 5C****,** the locking means **40** comprise a transverse through seat **41** which intersects the housing hole **10.**

This seat **41** is spaced apart from the transverse passage **36** of the constraint means **15** at a predetermined distance **d₄** which is selected to allow longitudinal alignment of the through hole **41** with the flattened section **8** of the tool **2.**

Namely, this distance **d₄** may be substantially equal to the distance d₅ that separates the rear face **7** of the tool **2** from the flattened section **8,** as shown in **Figure 1B****.**

A pivot pin **42,** as best shown in **Figures 6A - 6C****,** is also designed to be inserted into the through seat **41** and has two cylindrical end portions **43,** which are adapted to be fitted into the seat **41** with reduced clearance, and an eccentric middle portion **44** that is designed to be located at the intersection **45** between the hole **10** and the seat **41.**

Alternatively, in accordance with a configuration of the invention that is not shown, the middle portion may comprise a substantially Archimedean spiral shaped area, which is adapted to interact with the flattened section of the tool.

Particularly, the through seat **41** may be vertical and the pin **42** will be adapted to selectively rotate about its axis of extension **Y,** which is also vertical.

As the pivot pin **42** rotates, the eccentric portion **44** will be adapted to selectively interact with the flattened section **8** of the tool **2** to cause transverse movement thereof within the housing hole **10,** thereby eliminating the existing radial clearance.

Furthermore, the radial movement of the tool **2** can cause the creation of contact areas **19** between its outer surface **6** and the peripheral surface **18** of the pins **17.**

By acting upon the pivot pin **42,** the tool 2 may be selectively locked in the longitudinal direction and in any other transverse direction.

Furthermore, by rotating the pivot pin **42** in a predetermined direction of rotation, contact is promoted between the eccentric portion **44** and the flattened section **8** and this interaction generates a friction force with an axial component that acts on the tool **2** and is adapted to cause its rear face **7** to contact the surface **38** of the ball **37.**

During interaction of the eccentric portion **44** with the flattened section **8,** the tool **2** may be rotated about its axis **X**, to move the cutting edge **4** in a fixed and predetermined angular position.

Conveniently, as best shown in **Figures 6A - 6B****,** the locking means **40** may comprise a cylinder **46** made of hard metal which is designed to be introduced into a corresponding hole **47** formed on the pivot pin **42.**

This hole **47** will be in such a position as to allow the outer surface **48** of the cylinder **46** to project out of the eccentric portion **45,** such that it will first contact the flattened section **8** of the tool **2** during rotation of the pivot pin **42.**

In operation, the operator introduces the tool **2** into the housing hole **10** with the flattened section **8** oriented toward the cylinder **46** and then rotates the pivot pin **42** to cause the outer surface **48** of the cylinder **46** to interact with the groove **8** and the tool **2** to slightly rotate about its own axis **X**.Thus, the end cutting edge **4** of the tool **2** may be oriented in a precise fixed reference position relative to the device **1.**

Therefore, as the pivot pin **42** rotates, the interaction of the cylinder with the flattened section **8** of the tool **2** will cause a longitudinal and transverse translational movement of the latter, as well as its rotation about the axis **X** with a predetermined direction of rotation.

These translational and rotational movements are applied simultaneously to the tool **2** during interaction of the small cylinder **46** with the flattened section **8** and last as long as all longitudinal and transverse clearances existing between the tool **2** and the support device **1** have been recovered.

Furthermore, the pivot pin **42** may have a semicircular groove **49** formed on one of the two cylindrical portions **43** and is adapted to receive a small cylindrical pin **50** that passes through a hole formed in the body **9** and not shown.

The small cylindrical pin 50 will be adapted to engage the groove 49 to retain the pivot pin 42 within the through seat 41 and prevent it from sliding off as it rotates.

Furthermore, the rotation of the pin **42** will stop when the cylindrical pin **50** comes to abutment with the end **64** of the groove **49,** thereby defining a limit position of the pivot pin **42** which can allow introduction and removal of the tool **2** into and from the housing hole **10.**

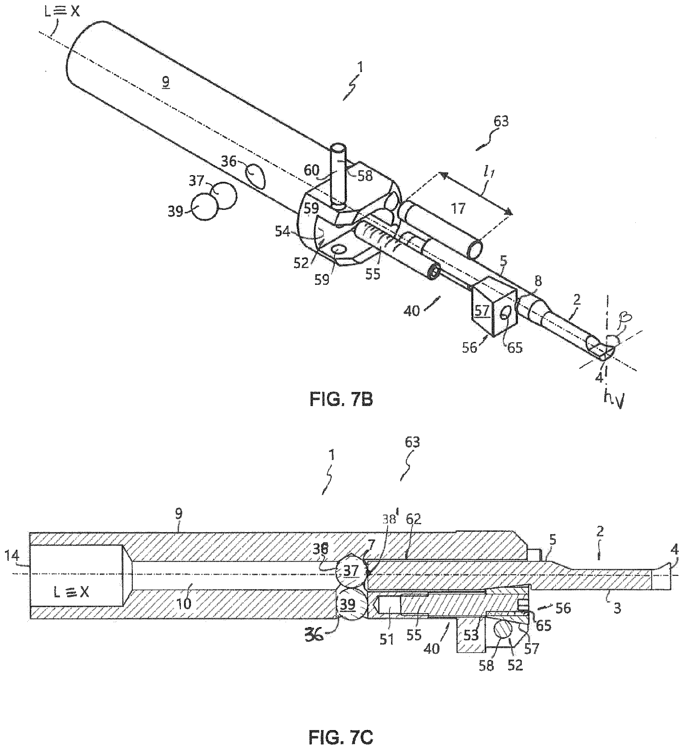

As best shown in **Figures 7A - 7C****,** the locking means **40** can be formed in an alternative configuration, which is specially designed for tools **2** having an inclined flattened section **8,** like the one as shown in **Figure 1B****.**

In this configuration the locking means **40** comprise an additional longitudinal hole **51** formed on the elongate body **9** on the periphery of the housing hole **10.**

The body **9** will further comprise a transverse undercut **52** that will be formed by grinding at the flattened section **8** of the tool **2.**

Namely, the longitudinal hole **51** has an opening **53** located at the bottom wall **54** of the undercut **52** and is threaded for a matingly threaded screw **55,** having both left an right threads, to be introduced herein and screwed and unscrewed.

This screw **55** is associated with a wedge-shaped head **56** having a lateral surface **57** designed to contact the inclined flattened section **8** of the tool **2.**

Namely, some threads of the screw **55,** preferably the right threads, will be screwed into the longitudinal hole **51,** whereas the other threads, preferably the left threads, will be screwed into a matingly threaded hole **65** formed on the wedge-shaped head **56.**

The dimensions of the undercut **52** may be suitably selected for the wedge **56** of the screw **55** to be entirely or partially accommodated therein.

The inclination of the flattened section **8** will be substantially equal to the inclination of the lateral surface **57** and a fixed transverse pin **58** will be also provided, and inserted through suitable holes **59** formed on the body **9.**

The pin **58** will extend through the undercut **52,** orthogonal thereto, with an outer surface **60** adapted to interact with the lateral surface **57** of the head **56** on the side facing away from the flattened section **8** of the tool, to be able to selectively retain it in both longitudinal and transverse directions.

Therefore, the provision of the transverse pin **58** allows the wedge **56** of the screw **55** to interact with the flattened section **8** of the tool **2** without rotating. As the screw **55** is being tightened, the pin **56** will allow interaction of the wedge **56** with the groove **8** to thereby lock the tool **2** in the longitudinal direction and eliminate the radial clearances thereof in the housing hole **10.**

Furthermore, the interaction of the wedge **56** with the flattened section **8,** occurring as the screw **55** is being tightened, will also cause the tool **2** to rotate about its own axis **X** with a predetermined direction of rotation, such that its end cutting edge **4** will be located in the reference position.

Namely, such rotation will continue as long as longitudinal and transverse clearances are present between the tool **2** and the support device **1.**

The longitudinal clearances will be eliminated when the rear end face **2** abuts the point-like portion **38'** of the surface **38** of the ball **37.**

Furthermore, as the screw **55** is being tightened, the outer surface **6** of the tool **2** will be moved to contact with the peripheral surface **18** of the pins **17,** thereby creating one or more continuous contact areas **19.**

Conveniently, the device of the invention may be configured to permit cooling of the cutting edge **4** of the tool by cooling liquid supply.

Thus, pumping means, not shown, may be provided, for directing the cooling liquid into the body **9** through the rear opening **14** of the housing hole **10.**

Then, the liquid may reach the front end **3** of the tool **2** through a small through hole **61** formed on the rear portion **5,** as best shown in **Figures 1A - 1B****.**

Alternatively, the tool **2** may be free of holes and the liquid may reach the cutting edge **4** by flowing along the gap **62** formed between the rear portion **5** of the tool **2** and the housing hole **10** as a result of the predetermined radial clearance between the tool **2** and the housing hole **10.**

Also, the sealing action of the ball **39** on the wall of the transverse passage **36** will prevent any liquid leakage outside the device **1.**

According to a further aspect of the invention, a support assembly is provided for supporting micro-cutting tools, which is designated by numeral **63,** in which the tool **2** is as described above and comprises a front portion **3** with a cutting edge 4 at its end and a rear portion **5** having a cylindrical outer surface **6** with a flattened section **8** formed thereon.

The assembly **63** also comprises a device **1** as described above having an elongate body **9** with a hole for housing **10** the tool **2,** constraint means **15** for setting a reference position for the tool **2** and means **40** for selectively locking the latter in the reference position.

Thus, the assembly may comprise a kit consisting of a toolholding device **1** and one or more cutting tools **2** which can be identical to or different from one another, and be adapted to perform a multitude of machining operations on a metal workpiece.

The present invention may be implemented in other variants, falling within the scope of the inventive features as claimed and described; these technical features may be replaced by other technically equivalent elements, and any material, as well as any shape and size; may be used in the invention, provided that they are compatible with its use.

The reference numerals and signs in the claims and description are only intended to improve the clarity of the text and shall not be deemed to be elements that limit the technical interpretation of the objects or processes identified therewith.

## Claims

1. A device (1) for supporting micro-tools (2), wherein the micro-tool (2) has a front portion (3) with a cutting end edge (4), a rear portion (5) with a substantially cylindrical outer surface (6), and a flattening (8) formed at the rear portion (5); which device (1) comprises:
- an elongated body (9) defining a longitudinal axis (L) and having a housing hole (10) provided with a center (C) to allow at least partially insertion of the rear portion (5) of the tool (2) with a predetermined radial clearance;
- constraint means (15) associated to said elongated body (9) and designed to interact with the substantially cylindrical outer surface (6) of the rear portion (5) to define a reference position for the cutting end edge (4) of the tool (2);
- locking means (40) associated to said elongated body (9) and designed to interact with the flattening (8) formed on the rear portion (5) of the tool (2) to allow the selective locking thereof in reference position;
wherein said constraint means (15) comprise at least a passage (16) intersecting said housing hole (10) and substantially parallel thereto, and a corresponding at least one pin (17) designed to be inserted into said at least one passage (16) and having a peripheral surface (18) adapted to selectively interact with the outer surface (6) of the rear portion (5) of the tool (2) to define therewith a substantially continuous contact area (19) which extends along the elongated direction of said pin (17);
**characterized in that** each pin (17) is coupled to a respective passage (16) by interference and is locked with respect to a substantially transversal direction to define a substantially constant and fixed position of said contact area (19) with respect the center (C) of said housing hole (10).

2. Device as claimed in claim 1, **characterized in that** the peripheral surface (18) of each pin (17) has at least one planar longitudinal section (27) which extends up to the whole length (I₁) thereof.

3. Device as claimed in claim 2, **characterized in that** said constraint means (15) comprise a blind longitudinal and substantially cylindrical passage (16) having a diameter (D₃) greater than the diameter (D₁) of said housing hole (10), said blind passage (16) being spaced from the centre (C) of the housing hole (10) with a first predetermined distance (d₁) selected to promote the intersection of the bling passage (16) with the housing hole (10).

4. Device as claimed in claim 3, **characterized in that** said constraint means (15) comprise a substantially cylindrical pin (17) provided with a longitudinal notch (25) having a substantially "V" -like shape designed to define a peripheral surface (18) with two planar and slanted longitudinal sections (27) which are reciprocally convergent toward the interior of the pin (17).

5. Device as claimed in claim 4, **characterized in that** said longitudinal plane sections (27) of said pin (17) are designed to be located proximate to the intersection area (24) between said housing hole (10) and said longitudinal passage (16) to be put into contact with the outer surface (6) of the rear portion (5) of the tool (2) and define with the same a pair of longitudinally continuous contact area (19).

6. Device as claimed in claim 1 or 2, **characterized in that** said constraint means (15) comprise a pair of substantially cylindrical and longitudinal blind passages (16) which are spaced from the centre (C) of the housing hole (10) with a predetermined second distance (d₂) selected to promote the intersection of the blind passages (16) with the housing hole (10), the longitudinal passages (16) of said pair being angularly spaced relative to each other with an angular pitch (α₂) lower than 180° .

7. Device as claimed in claim 6, **characterized in that** said constraint means (15) comprise a pair of cylindrical pins (17) each having a longitudinal flattening (27), said longitudinal flattening (27) being designed to be located proximate to the intersection area (24) between said housing hole (10) and the corresponding longitudinal passage (16) to be put in contact with the outer surface (6) of the rear portion (5) of the tool (2) and to define therewith a corresponding longitudinally continuous contact area (19).

8. Device as claimed in any claims from 2 to 7, **characterized in that** said contact areas (19) between the peripheral surface (18) of a corresponding pin (17) and the outer surface (6) of the tool (2) substantially extend up to the whole length (I₁) of said pin (17).

9. Device as claimed in claim 6, **characterized in that** said constraint means (15) comprise a pair of cylindrical pins (17) designed to be inserted into said passages (16) and having a peripheral surface (18) with a semicircular portion (34) designed to be located in correspondence of the intersection area (24) between said housing hole (10) and said longitudinal passage (16), said semicircular portion (34) being designed to be put in contact with the outer surface (6) of the rear portion (5) of the tool (2) to define therewith a corresponding longitudinally continuous contact area (19).

10. Device as claimed in one or more the preceding claims, **characterized in that** said constraint means (15) comprise a transverse passage (36) in communication with said housing hole (10) and spaced from the front face (11) of said body (9) of a predetermined distance (d₃), and a metallic sphere (37) designed to be inserted into said transverse passage (36) for partially closing said housing hole (10), said metallic sphere (37) having a peripheral surface (38) designed to be put in contact with the rear end face (7) of the tool (2) inserted in the housing hole (10) to define a longitudinal reference position thereof.

11. Device as claimed in claim 1, **characterized in that** said locking means (40) comprise a through transverse seat (41) intersecting said housing hole (10) and formed in said body (9) proximate to its front face (11), being provided a rotatable pivot (42) designed to be inserted into said seat (41) and having a central eccentric portion (44) designed to be located in correspondence of the intersection area (45) between said seat (41) and said housing hole (10).

12. Device as claimed in claim 11, **characterized in that** said seat (41) is spaced from said transverse passage (36) with a predetermined distance (d₄) select to align the central eccentric portion (44) of said pivot (42) with the flattening (8) formed on the tool (2), said pivot (42) being rotatable around its elongated axis (Y) for allowing the selective interaction between the central eccentric portion (44) and the flattening (8) of the tool (2) to simultaneously promote the transverse and longitudinal translation of the tool (2) and its rotation around the longitudinal axis (L) for selectively locking the cutting end edge (4) of the tool (2) in said reference position.

13. Device as claimed in claim 1, wherein said flattening (8) formed on the tool (2) is slanted, **characterized in that** said locking means (40) comprise a further longitudinal hole (51) located on the body (9) peripherally relative to the housing hole (10), said longitudinal hole (51) being threaded and designed to allow the screwing/unscrewing of a screw (55) with a cylindrical counter-threaded body and a head (56), said head (56) having a substantially wedge-like shape with a side surface (57) adapted to interact with the slanted flattening (8) of the tool (2) to simultaneously promote the transverse and longitudinal translation of the tool (2) and its rotation around the longitudinal axis (L) for selectively locking the cutting end edge (4) of the tool (2) in said reference position.

14. Device as claimed in claim 13, **characterized in that** said locking means (40) comprise a transverse recess (52) formed on the body (9) for allowing the at least partially housing of said head (56), and a fixed pivot (58) passing-through in said recess (52) and integral with said body (9), said fixed pivot (58) being designed to interact with said side surface (57) of the head (56) on the opposite site relative to the flattening (8) of the body (2) to maintain said head (56) substantially locked and promote the locking of the tool (2) during the screwing of the screw (55).

15. Support assembly (63) for supporting micro-tools, comprising:
- at least one cutting tool (2);
- a device (1) for supporting said at least one cutting tool (2);
wherein said at least one tool (2) has a front portion (3) with a cutting end edge (4) and a rear portion (5) having, respectively, a substantially cylindrical outer surface (6) and a flattening (8);
wherein said device (1) comprises a housing hole (10) for at least partially inserting the rear portion (5) of said tool (2), constraint means (15) designed to interact with the substantially cylindrical outer surface (6) of said rear portion (5) to define a reference position of said at least one tool (2) and locking means (40) designed to interact with said flattening (8) of said at least one tool (2) to selectively locking thereof in said reference position;
**characterized in that** said device (1) is of the type as claimed in one or more the preceding claims.

## Patentansprüche

1. Vorrichtung (1) zum Halten von Mikrowerkzeugen (2), wobei das Mikrowerkzeug (2) einen Vorderabschnitt (3) mit einer schneidenden Endkante (4), einen Hinterabschnitt (5) mit einer im Wesentlichen zylindrischen Außenfläche (6) und einer im Hinterabschnitt (5) gebildeten Abflachung (8) aufweist, wobei die Vorrichtung (1) Folgendes umfasst:
- einen länglichen Körper (9), der eine Längsachse (L) definiert und eine Aufnahmeöffnung (10) mit einem Mittelpunkt (C) aufweist, um die wenigstens teilweise Einsetzung des Hinterabschnitts (5) des Werkzeugs (2) mit einem vorbestimmten radialen Abstand zu erlauben;
- Festhaltemittel (15), die mit dem besagten länglichen Körper (9) verbunden und darauf ausgelegt sind, mit der im Wesentlichen zylindrischen Außenfläche (6) des Hinterabschnitts (5) zusammenzuwirken, um eine Bezugsposition für die schneidende Endkante (4) des Werkzeugs (2) zu definieren;
- Verriegelungsmittel (40), die mit dem besagten länglichen Körper (9) verbunden und darauf ausgelegt sind, mit der an dem Hinterabschnitt (5) des Werkzeugs (2) gebildeten Abflachung (8) zusammenzuwirken, um die selektive Blockierung des Werkzeugs (2) selbst in der Bezugsposition zu erlauben;
wobei die besagten Festhaltemittel (15) wenigstens einen Durchgang (16) umfassen, der die besagte Aufnahmeöffnung (10) schneidet und im Wesentlichen parallel dazu ist, sowie einen entsprechenden, wenigstens einen Stift (17), der darauf ausgelegt ist, in den besagten wenigstens einen Durchgang (16) eingesteckt zu werden, und der eine periphere Oberfläche (18) aufweist, die geeignet ist, selektiv mit der Außenfläche (6) des Hinterabschnitts (5) des Werkzeugs (2) zusammenzuwirken, um damit einen im Wesentlichen durchgehenden Kontaktbereich (19) zu definieren, welcher sich entlang der Längsrichtung des besagten Stifts (17) erstreckt;
**dadurch gekennzeichnet, dass** jeder Stift (17) durch Interferenz mit einem jeweiligen Durchgang (16) gekoppelt und bezüglich einer im Wesentlichen quer verlaufenden Richtung blockiert ist, um eine im Wesentlichen konstante und feste Position des besagten Kontaktbereichs (19) bezüglich des Mittelpunkts (C) der besagten Aufnahmeöffnung (10) zu definieren.

2. Vorrichtung nach Patentanspruch 1, **dadurch gekennzeichnet, dass** die periphere Oberfläche (18) jedes Stifts (17) wenigstens einen ebenen Längsabschnitt (27) aufweist, der sich über dessen gesamte Länge (I₁) erstreckt.

3. Vorrichtung nach Patentanspruch 2, **dadurch gekennzeichnet, dass** die besagten Festhaltemittel (15) einen blinden länglichen und im Wesentlichen zylindrischen Durchgang (16) umfassen, dessen Durchmesser (D₃) größer ist als der Durchmesser (D₁) der besagten Aufnahmeöffnung (10), wobei der besagte blinde Durchgang (16) vom Mittelpunkt (C) der Aufnahmeöffnung (10) mit einem ersten, vorbestimmten Abstand (d₁) distanziert ist, der so gewählt wurde, dass die Überschneidung des blinden Durchgangs (16) mit der Aufnahmeöffnung (10) gefördert wird.

4. Vorrichtung nach Patentanspruch 3, **dadurch gekennzeichnet, dass** die besagten Festhaltemittel (15) einen im Wesentlichen zylindrischen Stift (17) mit einer länglichen, im Wesentlichen "V"-förmigen Aussparung (25) umfassen, die so konzipiert ist, dass sie eine periphere Oberfläche (18) mit zwei planen und abgeschrägten Abschnitten (27) definiert, die wechselseitig zum Inneren des Stifts (17) konvergieren.

5. Vorrichtung nach Patentanspruch 4, **dadurch gekennzeichnet, dass** die besagten länglichen, planen Abschnitte (27) des besagten Stifts (17) so konzipiert sind, nahe des Überschneidungsbereichs (24) zwischen der besagten Aufnahmeöffnung (10) und dem besagten länglichen Durchgang (16) positioniert zu werden, um in Kontakt mit der Außenfläche (6) des Hinterabschnitts (5) des Werkzeugs (2) gebracht zu werden und mit diesem ein Paar länglicher, durchgehender Kontaktbereiche (19) zu definieren.

6. Vorrichtung nach Patentanspruch 1 oder 2, **dadurch gekennzeichnet, dass** die besagten Festhaltemittel (15) ein Paar im Wesentlichen zylindrischer und länglicher, blinder Durchgänge (16) umfassen, die vom Mittelpunkt (C) der Aufnahmeöffnung (10) mit einem zweiten, vorbestimmten Abstand (d₂) distanziert sind, der so gewählt wurde, dass die Überschneidung der blinden Durchgänge (16) mit der Aufnahmeöffnung (10) gefördert wird, wobei die länglichen Durchgänge (16) des besagten Paars bezüglich einander winklig distanziert sind mit einem Winkelabstand (a2) von unter 180°.

7. Vorrichtung nach Patentanspruch 6, **dadurch gekennzeichnet, dass** die besagten Festhaltemittel (15) ein Paar zylindrischer Stifte (17) umfassen, die jeweils eine längliche Abflachung (27) umfassen, wobei die besagte längliche Abflachung (27) so konzipiert ist, nahe des Überschneidungsbereichs (24) zwischen der besagten Aufnahmeöffnung (10) und dem entsprechenden länglichen Durchgang (16) positioniert zu werden, um in Kontakt mit der Außenfläche (6) des Hinterabschnitts (5) des Werkzeugs (2) gebracht zu werden und mit diesem einen entsprechenden länglichen, durchgehenden Kontaktbereich (19) zu definieren.

8. Vorrichtung nach einem jedem der Patentansprüche von 2 bis 7, **dadurch gekennzeichnet, dass** sich die besagten Kontaktbereiche (19) zwischen der peripheren Oberfläche (18) eines entsprechenden Stifts (17) und der Außenfläche (6) des Werkzeugs (2) im Wesentlichen über der gesamten Länge (I₁) des besagten Stifts (17) erstrecken.

9. Vorrichtung nach Patentanspruch 6, **dadurch gekennzeichnet, dass** die besagten Festhaltemittel (15) ein Paar zylindrischer Stifte (17) umfassen, die darauf ausgelegt sind, in die besagten Durchgänge (16) eingesteckt zu werden und eine periphere Oberfläche (18) mit einem halbkreisförmigen Abschnitt (34) aufweisen, der darauf ausgelegt ist, in Entsprechung mit dem Überschneidungsbereich (24) zwischen der besagten Aufnahmeöffnung (10) und dem besagten länglichen Durchgang (16) positioniert zu werden, wobei der besagte halbkreisförmige Abschnitt (34) darauf ausgelegt ist, in Kontakt mit der Außenfläche (6) des Hinterabschnitts (5) des Werkzeugs (2) gebracht zu werden, um mit diesem einen entsprechenden länglichen, durchgehenden Kontaktbereich (19) zu definieren.

10. Vorrichtung nach einem oder mehreren der vorstehenden Patentansprüche, **dadurch gekennzeichnet, dass** die besagten Festhaltemittel (15) einen Querdurchgang (36) umfassen, der mit der besagten Aufnahmeöffnung (10) kommuniziert und mit einem vorbestimmten Abstand (d₃) von der Vorderseite (11) des besagten Körpers (9) distanziert ist, sowie eine Metallkugel (37), die darauf ausgelegt ist, in den besagten Querdurchgang (36) eingesetzt zu werden, um die besagte Aufnahmeöffnung (10) teilweise zu schließen, wobei die besagte Metallkugel (37) eine periphere Oberfläche (38) aufweist, die darauf ausgelegt ist, mit der hinteren Endseite (7) des in die Aufnahmeöffnung (10) eingesetzten Werkzeugs (2) in Kontakt gebracht zu werden, um eine Längs-Bezugsposition desselben zu definieren.

11. Vorrichtung nach Patentanspruch 1, **dadurch gekennzeichnet, dass** die besagten Verriegelungsmittel (40) eine durchgehende Queraufnahme (41) aufweisen, welche die besagte Aufnahmeöffnung (10) schneidet und in dem besagten Körper (9) nahe seiner Vorderseite (11) geformt ist, wobei ein drehbarer Drehzapfen (42) vorhanden ist, der darauf konzipiert ist, in die besagte Aufnahme (41) eingesteckt zu werden und einen mittleren Exzenterabschnitt (44) aufweist, der darauf ausgelegt ist, in Entsprechung mit dem Überschneidungsbereich (45) zwischen der besagten Aufnahme (41) und der besagten Aufnahmeöffnung (10) angeordnet zu werden.

12. Vorrichtung nach Patentanspruch 11, **dadurch gekennzeichnet, dass** die besagte Aufnahme (41) mit einem vorbestimmten Abstand (d₄), der ausgewählt wurde, um den mittleren Exzenterabschnitt (44) des besagten Drehzapfens (42) auf die an dem Werkzeug (2) gebildete Abflachung (8) auszurichten, von dem besagten Querdurchgang (36) distanziert ist, wobei der besagte Drehzapfen (42) um seine Längsachse (Y) drehbar ist, um die selektive Interaktion zwischen dem mittleren Exzenterabschnitt (44) und der Abflachung (8) des Werkzeugs (2) zu erlauben, um gleichzeitig die Quer- und Längsverfahrung des Werkzeugs (2) und seine Drehung um die Längsachse (L) zu fördern, um die schneidende Endkante (4) des Werkzeugs (2) in der besagten Bezugsposition zu blockieren.

13. Vorrichtung nach Patentanspruch 1, wobei die besagte, an dem Werkzeug (2) gebildete Abflachung (8) abgeschrägt ist, **dadurch gekennzeichnet, dass** die besagten Verriegelungsmittel (40) eine weitere, peripher zu der Aufnahmeöffnung (10) an dem Körper (9) befindliche, längliche Bohrung (51) aufweisen, wobei die besagte längliche Bohrung (51) mit einem Gewinde versehen und darauf ausgelegt ist, das Ein- und Ausschrauben einer Schraube (55) mit einem zylindrischen Körper mit Gegengewinde und einem Kopf (56) zu erlauben, wobei der besagte Kopf (56) im Wesentlichen Keilform hat mit einer seitlichen Oberfläche (57), die geeignet ist, mit der abgeschrägten Abflachung (8) des Werkzeugs (2) zusammenzuwirken, um gleichzeitig die Quer- und Längsverfahrung des Werkzeugs (2) und seine Drehung um die Längsachse (L) zu fördern, um selektiv die schneidende Endkante (4) des Werkzeugs (2) in der besagten Bezugsposition zu blockieren.

14. Vorrichtung nach Patentanspruch 13, **dadurch gekennzeichnet, dass** die besagten Verriegelungsmittel (40) eine Quervertiefung (52) an dem Körper (9) umfassen, um die wenigstens teilweise Aufnahme des besagten Kopfes (56) zu erlauben, sowie einen feststehenden Drehzapfen (58), der diese Vertiefung (52) passiert und mit dem besagten Körper (9) eine Einheit bildet, wobei der besagte feststehende Drehzapfen (58) darauf ausgelegt ist, mit der besagten seitlichen Oberfläche (57) des Kopfes (56) an der der Abflachung (8) entgegengesetzten Seite des Körpers (2) zu interagieren, um den besagten Kopf (56) im Wesentlichen blockiert zu halten und die Blockierung des Werkzeugs (2) während des Schraubens der Schraube (55) zu fördern.

15. Halterungssystem (63) zum Halten von Mikrowerkzeugen, Folgendes umfassend:
- wenigstens ein Schneidwerkzeug (2);
- eine Vorrichtung (1) zum Halten des besagten wenigstens einen Schneidwerkzeugs (2);
wobei das besagte wenigstens eine Werkzeug (2) einen Vorderabschnitt (3) mit einer schneidenden Endkante (4) und einen Hinterabschnitt (5) jeweils mit einer im Wesentlichen zylindrischen Außenfläche (6) und einer Abflachung (8), aufweist;
wobei die besagte Vorrichtung (1) Folgendes umfasst: eine Aufnahmeöffnung (10) zur wenigstens teilweisen Einsetzung des Hinterabschnitts (5) des besagten Werkzeugs (2), Festhaltemittel (15), die darauf ausgelegt sind, mit der im Wesentlichen zylindrischen Außenfläche (6) des besagten Hinterabschnitts (5) zusammenzuwirken, um eine Bezugsposition des besagten wenigstens einen Werkzeugs (2) zu definieren, und Verriegelungsmittel (40), die darauf ausgelegt sind, mit der besagten Abflachung (8) des besagten wenigstens einen Werkzeugs (2) zusammenzuwirken, um dieses selektiv in der besagten Bezugsposition zu blockieren;
**dadurch gekennzeichnet, dass** die besagte Vorrichtung (1) von dem Typ ist, der in einem oder mehreren der vorstehenden Patentansprüche beansprucht wird.

## Revendications

1. Un dispositif (1) pour le support de micro-outils (2), où le micro-outil (2) présente une portion avant (3) avec un bord d'extrémité tranchant (4), une portion arrière (5) avec une surface extérieure essentiellement cylindrique (6), et un aplatissement (8) réalisé à hauteur de la portion arrière (5) ; où ledit dispositif (1) comprend:
- un corps allongé (9) définissant un axe longitudinal (L) et ayant un trou de logement (10) doté d'un centre (C) apte à consentir l'introduction au moins partiellement de la portion arrière (5) de l'outil (2) avec un jeu radial prédéterminé;
- des moyens d'obstacle (15) associés audit corps allongé (9) et aptes à interagir avec la surface extérieure essentiellement cylindrique (6) de la portion arrière (5) pour définir une position de référence pour le bord d'extrémité tranchant (4) de l'outil (2);
- des moyens de blocage (40) associés audit corps allongé (9) et aptes à interagir avec l'aplatissement (8) réalisé sur la portion arrière (5) de l'outil (2) pour consentir le blocage sélectif dans la position de référence;
où lesdits moyens d'obstacle (15) comprennent au moins un passage (16) entrecoupant ledit trou de logement (10) et essentiellement parallèle à celui-ci, et au moins une goupille (17) indiquée pour être introduite dans ledit au moins un passage (16) et dotée d'une surface périphérique (18) apte à interagir sélectivement avec la surface extérieure (6) de la portion arrière (5) de l'outil (2) pour déterminer avec celle-ci une zone de contact essentiellement continue (19) qui s'étend le long de la direction allongée de ladite goupille (17);
**caractérisé en ce que** chaque goupille (17) est accouplée par interférence à un passage correspondant (16) et est bloquée par rapport à une direction essentiellement transversale pour déterminer une position essentiellement fixe et constante de ladite zone de contact (19) par rapport au centre (C) dudit trou de logement (10).

2. Dispositif selon la revendication 1, **caractérisé en ce que** la surface périphérique (18) de chaque goupille (17) présente au moins une section longitudinale plane (27) qui s'étend pour toute sa longueur (I₁).

3. Dispositif selon la revendication 2, **caractérisé en ce que** lesdits moyens d'obstacle (15) comprennent un passage aveugle longitudinal essentiellement cylindrique (16) ayant un diamètre (D₃) plus grand que le diamètre (D₁) dudit trou de logement (10), ledit passage aveugle (16) étant espacé du centre (C) du trou de logement (10) avec une première distance prédéterminée (d1) sélectionnée de manière à favoriser l'intersection du passage aveugle (16) avec le trou de logement.

4. Dispositif selon la revendication 3, **caractérisé en ce que** lesdits moyens d'obstacle (15) comprennent une goupille essentiellement cylindrique (17) dotée d'une entaille longitudinale (25) essentiellement en forme de "V" apte à définir une surface périphérique (18) avec deux sections longitudinales planes et inclinées (27) convergeant réciproquement vers l'intérieur de la goupille (17).

5. Dispositif selon la revendication 4, **caractérisé en ce que** lesdites sections planes longitudinales (27) de ladite goupille (17) sont indiquées pour être disposées proche de la zone d'intersection (24) entre ledit trou de logement (10) et ledit passage longitudinal (16) pour entrer en contact avec la surface extérieure (6) de la portion arrière (5) de l'outil (2) et pour définir avec celle-ci un couple de zones de contact longitudinalement continues (19).

6. Dispositif selon la revendication 1 ou 2, **caractérisé en ce que** lesdits moyens d'obstacle (15) comprennent un couple de passages longitudinaux aveugles essentiellement cylindriques (16) qui sont espacés du centre (C) du trou de logement (10) avec une deuxième distance prédéterminée (d₂) choisie de manière à faciliter l'intersection des passages aveugles (16) avec le trou de logement (10), les passages longitudinaux (16) dudit couple étant espacés entre eux de manière angulaire avec un pas angulaire (α₂) inférieur à 180°.

7. Dispositif selon la revendication 6, **caractérisé en ce que** lesdits moyens d'obstacle (15) comprennent un couple de goupilles cylindriques (17) chacune présentant un aplatissement longitudinal (27), ledit aplatissement longitudinal (27) étant indiqué pour être positionné près de la zone d'intersection (24) entre ledit trou de logement (10) et le passage longitudinal correspondant (16) pour entrer en contact avec la surface extérieure (6) de la portion arrière (5) de l'outil (2) et pour définir avec celle-ci une zone de contact correspondante longitudinalement continue (19).

8. Dispositif selon l'une quelconque des revendications de 2 à 7, **caractérisé en ce que** lesdites zones de contact (19) entre la surface périphérique (18) d'une goupille correspondante (17) et la surface extérieure (6) de l'outil (2) s'étendent essentiellement pour toute la longueur (I₁) de ladite goupille (17).

9. Dispositif selon la revendication 6, **caractérisé en ce que** lesdits moyens d'obstacle (15) comprennent un couple de goupilles cylindriques (17) indiqués pour être introduites dans lesdits passages (16) et ayant une surface périphérique (18) avec une portion semi-circulaire (34) indiquée pour être positionnée à hauteur de la zone d'intersection (24) entre ledit trou de logement (10) et ledit passage longitudinal (16), ladite portion semi-circulaire (34) étant apte à entrer en contact avec la surface extérieure (6) de la portion arrière (5) de l'outil (2) pour définir avec celle-ci une zone de contact correspondante longitudinalement continue (19).

10. Dispositif selon l'une quelconque des revendications précédentes, **caractérisé en ce que** lesdits moyens d'obstacle (15) comprennent un passage transversal (36) communiquant avec ledit trou de logement (10) et disposé à une distance prédéterminée (d₃) de la face avant (11) dudit corps (9), et une sphère métallique (37) indiquée pour être introduite à l'intérieur dudit passage transversal (36) pour fermer partiellement ledit trou de logement (10), ladite sphère métallique (37) ayant une surface périphérique (38) indiquée pour entrer en contact avec la face d'extrémité arrière (7) de l'outil (2) introduit dans le trou de logement (10) pour établir une position longitudinale de référence.

11. Dispositif selon la revendication 1, **caractérisé en ce que** lesdits moyens de blocage (40) comprennent un siège transversal passant (41) entrecoupant ledit trou de logement (10) et formé dans ledit corps (9) à proximité de sa face avant (11), un pivot tournant (42) étant en outre prévu et qui peut être introduit à l'intérieur dudit siège (41) et étant pourvu d'une portion excentrique centrale (44) apte à être disposée à hauteur de la zone d'intersection (45) entre ledit siège (41) et ledit trou de logement (10).

12. Dispositif selon la revendication 11, **caractérisé en ce que** ledit siège (41) est espacé dudit passage transversal (36) avec une distance prédéterminée (d₄) choisie pour aligner la portion excentrique centrale (44) dudit pivot (42) avec l'aplatissement (8) réalisé sur l'outil (2), ledit pivot (42) étant tournant autour de son axe allongé (Y) de manière à consentir l'intersection sélective entre la portion excentrique centrale (44) et l'aplatissement (8) de l'outil (2) pour favoriser en même temps la translation longitudinale et transversale de l'outil (2) et sa rotation autour de l'axe longitudinal (L) pour bloquer sélectivement le bord d'extrémité tranchant (4) de l'outil (2) dans ladite position de référence.

13. Dispositif selon la revendication 1, où ledit aplatissement (8) réalisé sur l'outil (2) est incliné, **caractérisé en ce que** lesdits moyens de blocage (40) comprennent un trou supplémentaire longitudinal (51) se trouvant sur le corps (9) de manière périphérique par rapport au trou de logement (10), ledit trou longitudinal (51) étant fileté et apte à consentir le vissage/dévissage d'une vis (55) avec un corps cylindrique contre-fileté et une tête (56), ladite tête (56) essentiellement en forme de coin doté d'une surface latérale (57) apte à interagir avec l'aplatissement incliné (8) de l'outil (2) pour consentir en même temps la translation longitudinale et transversale de l'outil (2) et sa rotation autour de l'axe longitudinal (L) pour bloquer sélectivement le bord d'extrémité tranchant (4) de l'outil (2) dans ladite position de référence .

14. Dispositif selon la revendication 13, **caractérisé en ce que** lesdits moyens de blocage (40) comprennent une cavité transversale (52) réalisée sur le corps (9) pour consentir le logement au moins partial de ladite tête (56), et un pivot fixe (58) passant à travers ladite cavité (52) et solidaire dudit corps (9), ledit pivot fixe (58) étant apte à interagir avec ladite surface latérale (57) de la tête (56) sur le côté opposé par rapport à l'aplatissement (8) du corps (2) pour maintenir ladite tête (56) essentiellement bloquée et pour consentir le blocage de l'outil (2) durant le vissage de la vis (55).

15. Groupe de support (63) pour le soutien de micro-outils comprenant :
- au moins un outil de coupe (2) ;
- un dispositif (1) pour le support dudit au moins un outil de coupe (2) ;
où ledit au moins un outil (2) présente une portion avant (3) avec un bord d'extrémité tranchant (4) et une portion arrière (5) pourvue, respectivement, d'une surface extérieure essentiellement cylindrique (6) et d'un aplatissement (8) ;
où ledit dispositif (1) comprend un trou de logement (10) pour l'introduction au moins partielle de la portion arrière (5) dudit outil (2), des moyens d'obstacle (15) indiqués pour interagir avec la surface extérieure essentiellement cylindrique (6) de ladite portion arrière (5) pour établir une position de référence dudit au moins un outil (2) et des moyens de blocage (40) aptes à interagir avec l'aplatissement (8) dudit au moins un outil (2) pour le bloquer sélectivement dans ladite position de référence ;
**caractérisé en ce que** ledit dispositif (1) est du type selon l'une ou plusieurs des revendications précédentes.
